# EUROPEAN PATENT APPLICATION

(11) **EP 4 592 629 A2**
(43) Date of publication of application: **30.07.2025**
(21) Application number: 25178303.1
(22) Date of filing: 22.05.2025
(51) Int. Cl.: F28D 1/06, H01M 10/613, H01M 10/6567, H01M 10/6568, F28F 3/12

(54) **IMMERSION LIQUID COOLING DEVICE**

(30) Priority: 07.05.2025 CN 202510585040
(71) Applicant: Zhejiang Jinko Energy Storage Co., Ltd., Jiaxing, Zhejiang 314415 (CN)
(72) Inventor: ZHANG, Luhua, Haining, 314415 (CN); FU, Chuanxiang, Haining, 314415 (CN); WANG, Xiaojie, Haining, 314415 (CN)
(74) Representative: Haseltine Lake Kempner LLP

(57) **Abstract**

An immersion liquid cooling device includes a housing including a bottom plate and a side plate, and a liquid cooling member provided on the bottom plate. The bottom plate and the side plate define an accommodating cavity accommodating a battery cell group, and the side plate is provided with a liquid inlet and a liquid outlet. The liquid cooling member includes a flow channel portion extending along a first direction, a supporting portion is provided on one side of the flow channel portion in a second direction, a flow guide cavity is formed between the flow channel portion and the supporting portion, the flow guide cavity is in communication with the flow channel portion. An end of the flow channel portion is in communication with the liquid inlet. The flow channel portion is provided with a first supporting surface. The supporting portion is provided with a second supporting surface.

## Description

### TECHNICAL FIELD

The present application relates to the technical field of battery systems, and in particular to an immersion liquid cooling device.

### BACKGROUND

With the increasing demand for battery heat dissipation, immersion cooling devices are widely used in conventional technology to dissipate heat from a battery cell group. One way is to immerse the battery cell group in cooling liquid in a housing, and the heat can be conducted to the outside through end plates of the battery cell group. However, with this method, the farther a battery cell is from the end plate, the longer a heat conduction distance will be, resulting in uneven heat dissipation effect on the battery cells in the battery cell group. For example, the battery cells at both ends of the battery cell group and other battery cells may have a temperature difference of about 0.5 degrees.

### SUMMARY

Accordingly, it is necessary to provide an immersion liquid cooling device, which can ensure the consistency of the temperature of each battery cell in the battery cell group.

An immersion liquid cooling device includes: a housing including a bottom plate and a side plate, wherein the bottom plate and the side plate define an accommodating cavity configured to accommodate a battery cell group, and the side plate is provided with a liquid inlet and a liquid outlet; a liquid cooling member provided on the bottom plate, wherein the liquid cooling member includes a flow channel portion extending along a first direction, a supporting portion is provided at interval at at least one side of the flow channel portion in a second direction, the second direction is perpendicular to the first direction, a flow guide cavity having an open top is formed between the flow channel portion and the supporting portion, the flow guide cavity is in communication with the flow channel portion in the second direction, and an end of the flow channel portion in the first direction is in communication with the liquid inlet to introduce cooling liquid into the flow guide cavity; wherein the flow channel portion is provided with a first supporting surface extending along the first direction, the supporting portion is provided with a second supporting surface extending along the first direction, and the first supporting surface and the second supporting surface are configured to cooperatively support the battery cell group.

In some embodiments, in the first direction, the liquid cooling member further includes a front connecting member and a rear connecting member arranged in parallel, two ends of the flow channel portion are respectively connected to the front connecting member and the rear connecting member, two ends of the supporting portion are respectively connected to the front connecting member and the rear connecting member, and the front connecting member and the rear connecting member form a front cavity wall and a rear cavity wall of the flow guide cavity in the first direction.

In some embodiments, a bottom of the flow channel portion is connected to the bottom plate in a sealed manner, the bottom plate is connected to the supporting portion in a sealed manner, and the bottom plate constitutes a bottom wall of the flow guide cavity.

In some embodiments, a bottom of the flow channel portion has an opening, and the bottom plate constitutes a bottom wall of the flow channel portion.

In some embodiments, bottoms of the flow channel portion, the supporting portion, the front connecting member, and the rear connecting member are each provided with a bending portion, and the bending portion is attached to the bottom plate in parallel and connected to the bottom plate in a sealed manner.

In some embodiments, the liquid cooling member is a metal stamping member.

In some embodiments, the flow channel portion of the liquid cooling member and a bottom wall of the flow guide cavity are both closed, and the liquid cooling member is bonded, welded or fixed through a fastener to the bottom plate.

In some embodiments, a plurality of flow channel portions are provided in the second direction, the front connecting member is provided with a plurality of liquid injection ports respectively in communication with the plurality of flow channel portions, and the liquid inlet is in communication with each of the liquid injection ports through a pipeline.

In some embodiments, a plurality of flow channel portions are provided in the second direction, a branch flow channel in communication with each of the flow channel portions is provided in the front connecting member, and the front connecting member is provided with a liquid injection port, and the liquid injection port fluidly communicates the branch flow channel with the liquid inlet.

In some embodiments, another end of the flow channel portion in the first direction is provided with a notch, and the notch fluidly communicates an inner cavity of the flow channel portion with the flow guide cavity.

In some embodiments, in a height direction of the housing, the flow guide cavity has a structure with a large lower portion and a small upper portion.

In some embodiments, the first supporting surface and the second supporting surface are located at the same height, and are upper surfaces of tops of the flow channel portion and the supporting portion, respectively.

In some embodiments, the first supporting surface and the second supporting surface are located at the same height, and are respectively step surfaces formed on a side wall of the flow channel portion and a side surface of the supporting portion serving as cavity wall of the flow guide cavity, so that a bottom of the battery cell group partially enters the flow guide cavity when the battery cell group is carried.

In some embodiments, a flexible sealing gasket is provided on each of the first supporting surface and the second supporting surface.

In some embodiments, along the first direction, a plurality of blocking members are provided on each of the first supporting surface and the second supporting surface at intervals, and each blocking member is configured to be inserted into a gap between two adjacent battery cells in the battery cell group.

In some embodiments, in the first direction, the liquid outlet and the liquid inlet are located on the same side of the liquid cooling member, and a buffer cavity is provided between the liquid cooling member and the side plate.

In some embodiments, in a height direction of the housing, the liquid outlet is located above the liquid cooling member.

According to the above-mentioned immersion liquid cooling device, when the cooling liquid is continuously introduced into the flow channel portion, the cooling liquid first fills the flow guide cavity, then flows upward into all the gaps from the flow guide cavity, and then flows between adjacent two battery cells from bottom to top, so that each battery cell is immersed and cooled, and the cooling effect of the battery cells is improved. Moreover, the cooling liquid can overflow upward and flow into the gap only after filling the flow guide cavity, so that the cooling liquid can enter respective gaps at the same time, which enables that the heat dissipation effect on the battery cells tends to be consistent, and the temperature difference between the battery cells can be reduced. In addition, when the immersion liquid cooling device provided by the present application is in use, the two ends of the battery cell in the battery cell group are respectively supported on the first supporting surface and the second supporting surface to construct a liquid cooling system for the battery cell. Since the top of the flow guide cavity is open, the cooling liquid in the flow guide cavity can also be in direct contact with a part of the bottom surface of the battery cell, thereby taking away heat and improving the heat dissipation effect on the battery cell.

### BRIEF DESCRIPTION OF THE DRAWINGS

FIG1 is a perspective view of an immersion liquid cooling device of the present application.
FIG. 2 is a top view of the immersion liquid cooling device of FIG. 1.
FIG. 3 is a schematic structural view of a liquid cooling battery pack formed based on the immersion liquid cooling device of the present application.
FIG. 4 is a cross-sectional view of the liquid cooling battery pack of FIG. 3 along a width direction of the liquid cooling battery pack.
FIG. 5 is a perspective view of a battery cell group of the present application.
FIG. 6 is a schematic view of forming a gap between two adjacent battery cells in the battery cell.
FIG. 7 is a schematic view illustrating a guide cavity of a liquid cooling member of the present application in communication with the gap between adjacent two battery cells.
FIG. 8 is a partial cross-sectional view of the liquid cooling member of the present application supporting the battery cell.
FIG. 9 is a schematic structural view of the liquid cooling member in FIG. 1.
FIG. 10 is a schematic structural view of the liquid cooling member of FIG. 9 supporting a plurality of battery cell groups.
FIG. 11 is a schematic structural view of the liquid cooling member according to another embodiment of the present application.
FIG. 12 is a schematic structural view of the liquid cooling member supporting the battery cell group according to an embodiment of the present application.
FIG. 13 is a schematic structural view of the liquid cooling member according to another embodiment of the present application.
FIG. 14 is a schematic view of a partial structure of the liquid cooling member according to yet another embodiment of the present application.
FIG. 15 is a cross-sectional schematic view of a flow guide cavity having a structure in which a lower portion is relatively large and an upper portion is relatively small.
FIG. 16 is a schematic view illustrating that a first supporting surface and a second supporting surface of the liquid cooling member are arranged in another manner.
FIG. 17 is a schematic structural view illustrating that flexible sealing gaskets are provided on the first supporting surface and the second supporting surface of the liquid cooling member.
FIG. 18 is a schematic structural view illustrating that blocking members are provided on the first supporting surface and the second supporting surface of the liquid cooling member.

### Description of reference numerals:

100. liquid cooling battery pack; 1. immersion liquid cooling device; 10. housing; 110. bottom plate; 120. side plate; 121. liquid inlet; 122. liquid outlet; 130. accommodating cavity; 140. buffer cavity; 20. liquid cooling member; 210. flow channel portion; p1. top wall; p2. side wall; 211. first supporting surface; 212. channel; 213. notch; 214. opening; 215, bending portion; 216, first step portion; 220, supporting portion; p3, side surface; 221, second supporting surface; 222, flow channel; 223, second step portion; 230, flow guide cavity; 240, front connecting member; 241, liquid injection port; 242, branch flow channel; 250, rear connecting member; 260, flexible sealing gasket; 270, blocking member; 30. battery cell group; 310. battery cell; 320, gap; 330, isolation member; 40. cooling liquid; 50. cover plate.

### DETAILED DESCRIPTION OF THE EMBODIMENTS

In order to make the above objectives, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuths or position relationships shown in the attached drawings. These terms are only for the convenience of describing the present application and simplifying the description, rather than indicating or implying that the indicated devices or elements must have the specific azimuths, or be constructed or operated in the specific azimuths, and therefore such terms cannot be understood as limitations of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "a plurality of" means at least two, such as two, three, etc., unless otherwise expressly and specifically defined.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature "above" or "below" a second feature may be in direct contact with the second feature, or the first and second features may be in indirect contact through an intermediate medium. Moreover, the first feature "above" the second feature may be right above or obliquely above the second feature, or the first feature may be merely located at a height higher than the second feature. The first feature "below" the second feature may be right below or obliquely below the second feature, or the first feature may be merely located at a height lower than that of the second feature.

It should be noted that when an element is called "fixed to" or "provided on" another element, it can be directly on another element or there can be an intermediate element. When an element is considered to be "connected" to another element, it can be directly connected to another element or there can be an intermediate element. The terms "vertical", "horizontal", "up", "down", "left", "right" and similar expressions used herein are for the purpose of illustration only and do not represent the only ways for implementation.

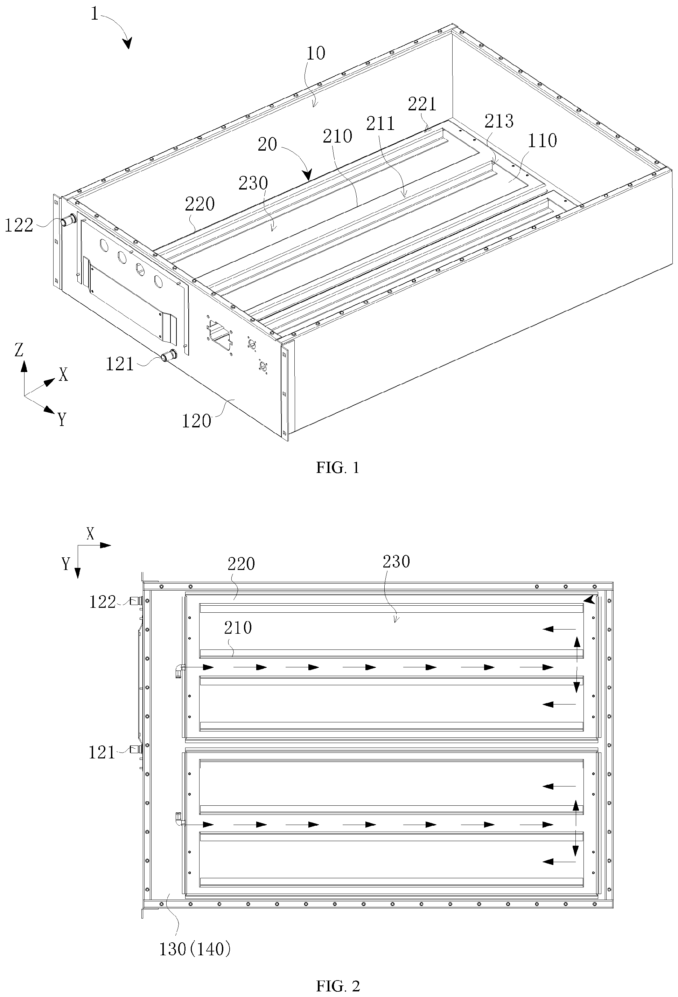

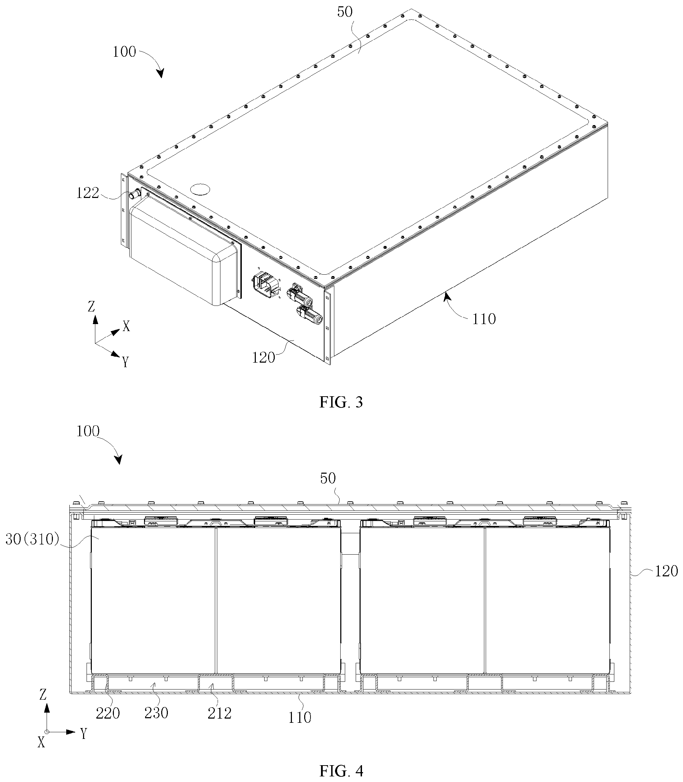

Referring to FIG. 1 to FIG. 8, the present application provides an immersion liquid cooling device 1, which can achieve liquid cooling of a battery cell 310. Further, the immersion liquid cooling device 1 of the present application can be used to manufacture a liquid cooling battery pack 100 (see FIG. 3). The details are explained below.

Referring to FIGS. 1 and 2, the immersion liquid cooling device 1 according to some embodiments of the present application includes a housing 10 and a liquid cooling member 20 provided in the housing 10. The housing 10 is configured to accommodate a battery cell group 30 (see FIG. 4). Referring to FIG. 4 to FIG. 8, the liquid cooling member 20 is configured to support the battery cell group 30 and guide external cooling liquid 40 to a gap 320 between adjacent two battery cells 310 in the battery cell group 30.

The housing 10 includes a bottom plate 110 and a side plate 120. The bottom plate 110 and the side plate 120 define an accommodating cavity 130 configured to accommodate the battery cell group. The side plate 120 is provided with a liquid inlet 121 and a liquid outlet 122. The top of the accommodating cavity 130 is open. When preparing the liquid cooling battery pack 100, after the battery cell 310 is placed in the housing 10, a cover plate 50 is used to be assembled with the side plate 120 to seal the accommodating cavity 130. The liquid inlet 121 may be connected to a liquid supply port of an external liquid cooling unit, and the liquid outlet 122 may be connected to a liquid return port of the liquid cooling unit, thereby forming a forced liquid cooling circulation. Alliteratively, the liquid inlet 121 may be connected to a liquid supply port of an external liquid cooling unit, and the liquid outlet 122 is configured to allow liquid to be discharged to the outside or recovered.

Referring to FIG. 1, FIG. 2, FIG. 4, FIG. 7 and FIG. 8, the liquid cooling member 20 is provided on the bottom plate 110. The liquid cooling member 20 includes a flow channel portion 210 extending along a first direction X, and a supporting portion 220 is provided at interval at at least one side of the flow channel portion 210 in a second direction Y, and the second direction Y is perpendicular to the first direction X. A flow guide cavity 230 having an open top is formed between the flow channel portion 210 and the supporting portion 220. The flow guide cavity 230 is in communication with the flow channel portion 210 in the second direction Y, and an end of the flow channel portion 210 in the first direction X is in communication with the liquid inlet 121, so as to introduce the cooling liquid 40 into the flow guide cavity 230. The flow channel portion 210 is provided with a first supporting surface 211 extending along the first direction X, and the supporting portion 220 is provided with a second supporting surface 221 extending along the first direction X. The first supporting surface 211 and the second supporting surface 221 are configured to cooperatively support the battery cell group.

In the present application, the first direction X refers to a length direction of the housing 10, the second direction Y perpendicular to the first direction X refers to a width direction of the housing 10, and a third direction Z refers to a height direction of the housing 10.

Referring to FIG. 2, FIG. 7 and FIG. 8, the flow channel portion 210 is provided with a channel 212 through which the cooling liquid 40 can flow. One end of the channel 212 is in communication with the liquid inlet 121 through a pipeline, and the channel 212 is in communication with the flow guide cavity 230. Optionally, the other end of the channel 212 in the first direction X is provided with a notch 213 to communicate with the flow guide cavity 230 in the second direction Y, or other positions of the channel 212 is in communication with the flow guide cavity 230.

The flow channel portion 210 and the supporting portion 220 are spaced apart in the second direction Y, and a gap between the flow channel portion 210 and the supporting portion 220 is configured to form the flow guide cavity 230. The supporting portion 220 is configured to support the battery cell assembly 30 together with the flow channel portion 210. In the embodiment, the supporting portion 220 is mainly configured to support the battery cell 310, and a flow channel for the cooling liquid 40 to flow may not be provided in the supporting portion 220.

In other embodiments, a flow channel 222 is provided in the supporting portion 220. The flow channel 222 is in communication with the flow channel portion 210 and an internal space of the housing 10. In this way, the cooling liquid 40 can flow from the flow channel portion 210 to the supporting portion 220, and the cooling liquid 40 also flows through the supporting portion 220. Therefore, both the supporting portion 220 and the flow channel portion 210 can dissipate heat from the bottom of the battery cell 310.

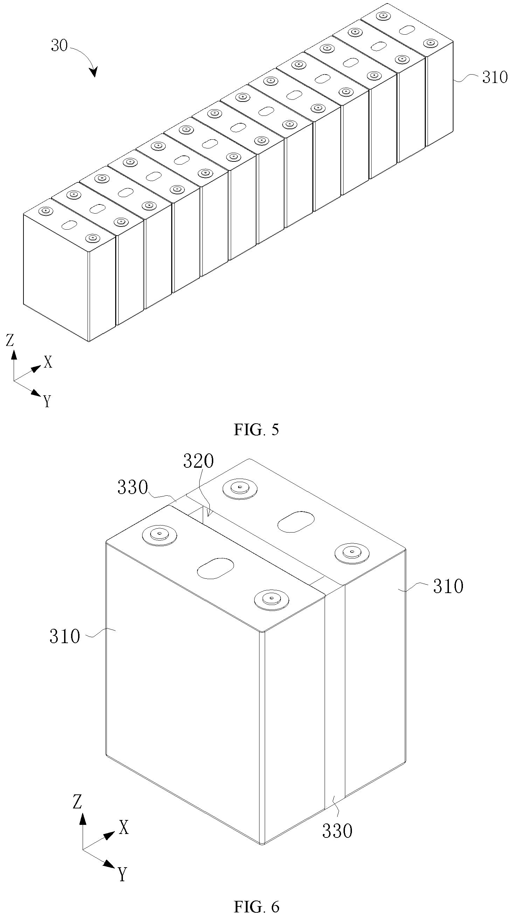

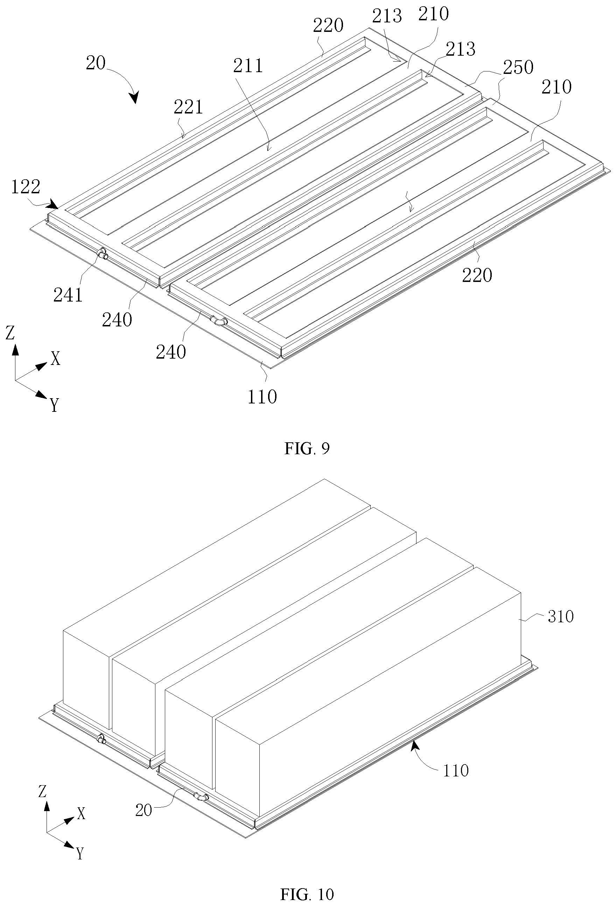

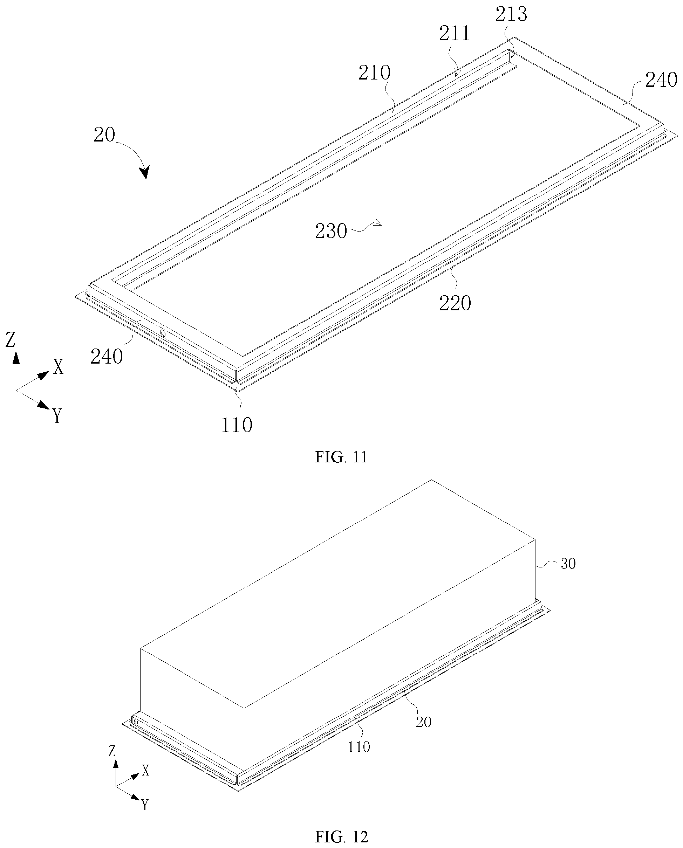

Optionally, as shown in FIG. 9, the supporting portions 220 may be respectively provided on both sides of the flow channel portion 210 in the second direction Y. In this way, as shown in FIG. 10, each flow channel portion 210 and two supporting portions 220 at both sides thereof can support two battery cell groups 30. In FIG. 9, two flow channel portions 210 are provided, and two supporting portions 220 may be respectively provided at both sides of each flow channel portion 210, so as to support four battery cell groups 30. As shown in FIG. 5, each battery cell group 30 includes a plurality of battery cells 310 arranged in the first direction X. Optionally, as shown in FIG. 11, the supporting portion 220 may be provided only at one side of the flow channel portion 210 in the second direction Y. The flow channel portion 210 and the supporting portion 220 can support one battery cell group 30, as shown in FIG. 12.

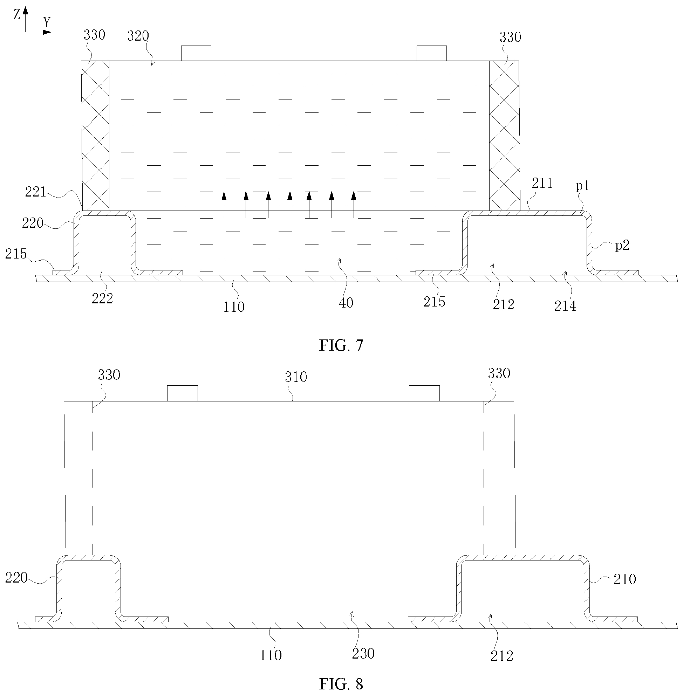

The top of the flow guide cavity 230 is open. Referring to FIG. 2, FIG. 4, FIG. 7 and FIG. 8, FIG. 7 is a schematic view of a cross-section of the battery cell 310 along the second direction Y, and FIG. 8 is a schematic view of a cross-section of the battery cell 310 along the second direction Y and through the gap 320 between adjacent battery cells 310.

When the battery cell 310 is supported on the first supporting surface 211 and the second supporting surface 221, two ends of the battery cell 310 in the second direction Y are respectively supported on the first supporting surface 211 and the second supporting surface 221, the gap 320 between adjacent two battery cells 310 is at least partially located above the flow guide cavity 230, and the gap 320 is in communication with the flow guide cavity 230 in the third direction Z of the flow guide cavity 230. Both ends of the flow guide cavity 230 in the first direction X are sealed, and the sealing manner is not limited. For example, the flow guide cavity 230 is sealed by the side plate 120 of the housing 10, or a sealing member is separately provided.

It should be understood that, in the first direction X, the length of the first supporting surface 211 and the length of the second supporting surface 221 are determined according to the length of the battery cell group 30 to be supported. The length of the flow guide cavity 230 in the first direction X is configured such that the flow guide cavity 230 can cover all the gaps 320. In other words, when the battery cell group 30 is placed on the liquid cooling member 20, the length of the battery cell group 30 in the first direction X is adapted to the length of the first supporting surface 211 and the length of the second supporting surface 221, so as to ensure that all the battery cells 310 can be supported. The length of the flow guide cavity 230 in the first direction X is configured such that all gaps 320 are in communication with the flow guide cavity 230 in the third direction Z.

The formation of the gap 320 between the two battery cells 310 is not limited. Optionally, referring to FIG. 6 to FIG. 8, two isolation members 330 are provided between adjacent two battery cells 310 in the battery cell group 30 at intervals in the second direction Y. The two isolation members 330 creates a gap 320 between adjacent two battery cells 310, and the two isolation members 330 can close both ends of the gap 320 in the second direction Y, so that the gap 320 between the adjacent two battery cells 310 forms a cooling liquid channel that is open up and down.

Referring to FIG. 2 and FIG. 7, how to use the immersion liquid cooling device 1 of the present application to perform immersion liquid cooling heat dissipation on the battery cell 310 will be described below.

As shown in FIG. 2, the flow direction of the cooling liquid 40 in the liquid cooling member 20 after entering the liquid cooling member 20 is indicated by the arrows in FIG. 2. Specifically, the cooling liquid 40 enters from the left end of the flow channel portion 210, and then flows rightward along the first direction X to the right end of the flow channel portion 210, and then enters the flow guide cavity 230 along the second direction Y. As shown in FIG. 4 and FIG. 12, after the cooling liquid 40 is filled in the flow guide cavity 230, under the pressure of the continuous inflow of the cooling liquid 40, the cooling liquid 40 in the flow guide cavity 230 overflows the flow guide cavity 230 and overcome gravity to flow upward into each gap 320 at the same time. In the third direction Z, the cooling liquid 40 fills the gap 320 and then flows out from the top of the gap 320 into the housing 10, and is finally discharged from the outlet 122.

According to the immersion liquid cooling device 1 provided by the present application, when the cooling liquid 40 is continuously introduced into the flow channel portion 210, the cooling liquid 40 first fills the flow guide cavity 230, then flows upward into all the gaps 320 from the flow guide cavity 230, and then flows between adjacent two battery cells 310 from bottom to top, so that each battery cell 310 is immersed and cooled, and the cooling effect on the battery cells 310 is improved. Moreover, the cooling liquid 40 can overflow upward and flow into the gap 320 only after filling the flow guide cavity 230, so that the cooling liquid 40 can enter respective gaps 320 at the same time, so that the heat dissipation effect on the battery cells 310 tends to be consistent, and the temperature difference between the battery cells 310 can be reduced. In addition, when the immersion liquid cooling device 1 provided by the present application is in use, the two ends of the battery cell 310 in the battery cell group 30 are respectively supported on the first supporting surface 211 and the second supporting surface 221 to construct a liquid cooling system for the battery cell 310. Since the top of the flow guide cavity 230 is open, the cooling liquid 40 in the flow guide cavity 230 can be in direct contact with a part of the bottom surface of the battery cell 310, thereby taking away heat and improving the heat dissipation effect on the battery cell 310.

In some embodiments, referring to FIG. 9, in the first direction X, the liquid cooling member 20 further includes a front connecting member 240 and a rear connecting member 250 arranged in parallel. Two ends of the flow channel portion 210 are respectively connected to the front connecting member 240 and the rear connecting member 250. Two ends of the supporting portion 220 are respectively connected to the front connecting member 240 and the rear connecting member 250. The front connecting member 240 and the rear connecting member 250 form a front cavity wall and a rear cavity wall of the flow guide cavity 230 in the first direction X.

Referring to FIG. 9, in the embodiment, two supporting portions 220 are respectively provided at both sides of each flow channel portion 210. Each flow channel portion 210 is connected to the two supporting portions 220 at both sides thereof through one front connecting member 240 and one rear connecting member 250 to form a supporting module. The front connecting member 240 is provided with the liquid inlet 121 in communication with the flow channel portion 210.

In FIG. 9, two such supporting modules are provided. Adjacent supporting portions 220 of the two supporting modules are connected by a transition member. It should be understood that more than two such supporting modules can be provided. Referring to FIG. 11, when the supporting portion 220 is provided at only one side of the flow channel portion 210, similarly, the two ends of the flow channel portion 210 are respectively connected to the two ends of the supporting portion 220 through one front connecting member 240 and one rear connecting member 250.

In the present application, the front connecting member 240 and the rear connecting member 250 are used to respectively close the two ends of the flow guide cavity 230 in the first direction X, and the front connecting member 240 and the rear connecting member 250 integrate the flow channel portion 210 with the supporting portion 220, thereby improving the integrity and strength of the liquid cooling member 20, and facilitating the installation of the liquid cooling member 20 to the bottom plate 110. Moreover, a modular design of the liquid cooling member 20 can be realized in this mode. Specifically, any number of supporting modules can be formed as required to provide more options for the design of the liquid cooling battery pack 100, and adjacent supporting modules can further be connected to each other.

In some embodiments, the bottom of the flow channel portion 210 is connected to the bottom plate 110 in a sealed manner, the bottom plate 110 is connected to the supporting portion 220 in a sealed manner, and the bottom plate 110 constitutes a bottom wall of the flow guide cavity 230.

Specifically, referring to FIG. 4 and FIG. 7, in this embodiment, the bottom plate 110 is used to form the bottom wall of the flow guide cavity 230, so that the liquid cooling member 20 itself does not need to be provided with the bottom wall of the flow guide cavity 230. After the liquid cooling member 20 is mounted on the bottom plate 110, the bottom of the flow guide cavity 230 can be sealed by only connecting the bottom of the flow channel portion 210 to the bottom plate 110 in a sealed manner and connecting the bottom plate 110 to the supporting portion 220 in a sealed manner, thereby forming the flow guide cavity 230 capable of storing liquid. The manner of sealing connection is not limited herein, and it can be, for example, welding or sealant connection, etc.

According to the design solution of this embodiment, the bottom of the flow guide cavity 230 can be sealed by using the existing bottom plate 110 of the housing 10, which can simplify the structure of the liquid cooling member 20 and reduce the weight of the liquid cooling component 20, and can also simplify the structure of the entire immersion liquid cooling device 1 and reduce the weight thereof.

In some embodiments, referring to FIG. 7, the bottom of the flow channel portion 210 has an opening 214, and the bottom plate 110 constitutes a bottom wall of the flow channel portion 210.

In the embodiment, the bottom of the flow channel portion 210 is open, that is, the flow channel portion 210 includes a top wall p1 and a side wall p2, the top wall p1 and the side wall p2 define the channel 212, and the channel 212 is in an open state at its bottom wall. After the flow channel portion 210 is mounted to the bottom plate 110, a lower end surface of the side wall p2 is connected to the bottom plate 110 in a sealed manner, so that the cooling liquid 40 can flow along the first direction X in the channel 212. The manner of sealing connection is not limited herein, and it can be, for example, welding or sealant connection. In this embodiment, the bottom plate 110 is used to form the bottom wall of the channel 212 in the flow channel portion 210, thereby simplifying the structure of the flow channel portion 210 and reducing the weight thereof.

In some embodiments, the bottoms of the flow channel portion 210, the supporting portion 220, the front connecting member 240, and the rear connecting member 250 are each provided with a bending portion 215, and the bending portion 215 is attached to the bottom plate 110 in parallel and connected to the bottom plate 110 in a sealed manner.

Specifically, referring to FIG. 7 and FIG. 9, the flow channel portion 210, the supporting portion 220, the front connecting member 240, and the rear connecting member 250 are each provided with the bending portion 215. Taking the flow channel portion 210 as an example, two side walls p2 of the flow channel portion 210 are respectively bent outward to form two bending portions 215 flush with each other. Similarly, the supporting portion 220, the front connecting member 240, and the rear connecting member 250 are each provided with two bending portions 215. Certainly, the flow channel portion 210, the supporting portion 220, the front connecting member 240, and the rear connecting member 250 may be each provided with only one bending portion 215.

When the liquid cooling member 20 is mounted on the bottom plate 110, the bending portions 215 are all attached to the bottom plate 110, and the liquid cooling member 20 and the bottom plate 110 have a large contact plane, so that the support for the liquid cooling member 20 is more stable.

In some embodiments, the liquid cooling member 20 is a metal stamping member. The liquid cooling member 20 can be made by a metal stamping process, so that the structure shown in FIGS. 9 and 11 can be easily manufactured. In the manufacturing process, the channel 212 in the flow channel portion 210 and the aforementioned bending portion 215 can also be formed at the same time, which is convenient for processing and manufacturing.

In some embodiments, the flow channel portion 210 of the liquid cooling member 20 and the bottom wall of the flow guide cavity 230 are both closed, and the liquid cooling member 20 is bonded, welded, or fixed through a fastener to the bottom plate 110.

In the embodiments shown in FIGS. 7 and 9, the bottom plate 110 is used to form the flow channel portion 210 and the bottom wall of the flow guide cavity 230. However, in the embodiment, the flow channel portion 210 and the flow guide cavity 230 each have a bottom wall. In this way, the liquid cooling member 20 can be bonded, welded or fixed through a fastener to the bottom plate 110. In this case, there is no need to use a sealant or a welding flux to achieve good sealing between the flow channel portion 210 and the bottom plate 110, and the sealant and the welding flux can only serve as a fixing and connection function, which facilitates the assembly of the liquid cooling member 20 and the bottom plate 110 to a certain extent.

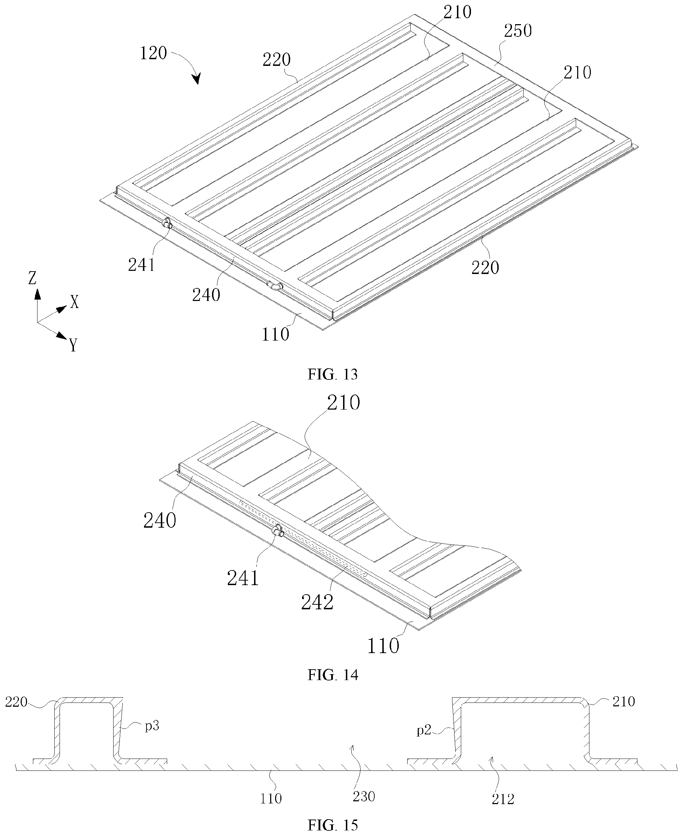

In some embodiments, referring to FIG. 13, a plurality of flow channel portions 210 are provided in the second direction Y. The front connecting member 240 is provided with a plurality of liquid injection ports 241 respectively in communication with the plurality of flow channel portions 210. The liquid inlet 121 is in communication with each of the liquid injection ports 241 through a pipeline.

Different from the embodiment shown in FIG. 9, in this embodiment, in the second direction Y, the front connecting members 240 of the supporting modules are connected as a whole, and the rear connecting members 250 of the supporting modules are connected as a whole. The front connecting member 240 is provided with a plurality of liquid injection ports 241, and each liquid injection port 241 can be in communication with the liquid inlet 121 on the housing 10 through a pipeline. In this way, the flow channel portions 210 are in communication with the liquid inlet 121 in parallel, and the battery cells 310 in each battery cell group 30 can be cooled in time.

In some embodiments, referring to FIG. 14, a plurality of flow channel portions 210 are provided in the second direction Y, a branch flow channel 242 in communication with each of the flow channel portions 210 is provided in the front connecting member 240, and the connecting member 240 is provided with a liquid injection port 241, and the liquid injection port 241 fluidly communicates the branch flow channel 242 with the liquid inlet 121.

Different from the embodiment shown in FIG. 13, in this embodiment, the front connecting member 240 is provided with only one liquid injection port 241, and the front connecting member 240 is internally hollowed to form the branch flow channel 242 which is in communication with each of the flow channel portions 210. The branch flow channel 242 is formed inside the front connecting member 240 as indicated by a dotted line in FIG. 14. The branch flow channel 242 extends along the second direction Y and is in communication with each of flow channel portions 210 in the first direction X.

With such a design, the liquid inlet 121 on the housing 10 can supply liquid to each of the flow channel portions 210 only through one pipeline, and the pipeline structure in the housing 10 is simple, which saves more space in the housing 10, so that other electronic components required by the battery pack can be arranged.

In some embodiments, as shown in FIG. 1, FIG. 2, and FIG. 9, in the first direction X, the liquid outlet 122 and the liquid inlet 111 are located on the same side of the liquid cooling member 20, and a buffer cavity 140 is provided between the liquid cooling member 20 and the side plate 120. The other end of the flow channel portion 210 in the first direction X is provided with the notch 213, and the notch 213 fluidly communicates an inner cavity of the flow channel portion 210 with the flow guide cavity 230.

Referring to FIG. 2, the liquid outlet 122 and the liquid inlet 121 on the housing 10 are both located at the left side of the liquid cooling member 20. The buffer cavity 140 is provided between the liquid cooling member 20 and the side plate 120. By providing the buffer cavity 140, the buffer cavity 140 is used for placing the pipeline, and the buffer cavity 140 can also be used to accommodate the cooling liquid 40 overflowing from the top of the gap 320. After the cooling liquid 40 is accumulated in and fills the buffer cavity 140, it is discharged from the liquid outlet 122.

The notch 213 is provided at the other end of the flow channel portion 210 away from the liquid inlet 121 on the housing 10. The end of the flow channel portion 210 adjacent to the liquid inlet 121 can be referred to as a head end of the flow channel portion 210, and the end of the flow channel portion 210 provided with the notch 213 may be referred to as a tail end of the flow channel portion 210. Specifically, the notch 213 is formed in a lower portion of the side wall p2 of the flow channel portion 210. The notch 213 is provided at the end of the flow channel portion 210, and the cooling liquid 40 enters the flow guide cavity 230 after flowing through the whole flow channel portion 210, so that a part of the heat on the bottom surface of the battery cell 310 can be taken away.

As shown in FIG. 2 and FIG. 9, after entering the flow channel portion 210 from the head end thereof, the cooling liquid 40 flows rightward along the first direction X to the tail end of the flow channel portion 210, and then enters the flow guide cavity 230 from the notch 213. The notch 213 can be understood as a liquid inlet of the flow guide cavity 230. The cooling liquid 40 then flows in an opposite direction toward the left and gradually fills the flow guide cavity 230. After the flow guide cavity 230 is filled with the cooling liquid 40, due to the pressure exerted by the cooling liquid 40 that is continuously injected subsequently, the cooling liquid 40 in the flow guide cavity 230 can overcome the gravity and enter each gap 320 from the bottom of each gap 320, i.e., an inlet. Then, the cooling liquid 40 flows out from the top of the gap 320, i.e., an outlet, and flows leftward along the first direction X to reach the buffer cavity 140, and finally flows out from the liquid outlet 122.

When the cooling liquid flows into the flow guide cavity 230 and flows out from the liquid outlet 122, the liquid pressures at different locations in the flow guide cavity 230 are different. The pressure near the notch 213 is relatively high, and the pressure decreases as the distance from the liquid inlet of the flow guide cavity 230 increases. A distance between an inlet of the gap 320 and the notch 213 along the first direction X is defined as a first distance. That is, when the first distance is smaller, the liquid pressure at the inlet of the gap 320 corresponding to the first distance is larger, and the liquid in the flow guide cavity 230 will flow into the corresponding gap 320 more easily. Correspondingly, the liquid pressures at different locations in the buffer cavity 140 are also different. The pressure near the liquid outlet 122 is relatively high, and the pressure decreases as the distance from the liquid outlet 122 increases. A distance between an outlet of the gap 320 and the liquid outlet 122 along the first direction X is defined as a second distance. That is, when the second distance is smaller, the liquid pressure at the outlet of the corresponding gap 320 is larger, and the liquid at the outlet of the gap 320 will flow toward the liquid outlet 122 more easily.

Since the liquid inlet (i.e., the notch 213) of the flow guide cavity 230 and the liquid outlet 122 are respectively located at both sides of the plurality of gaps 320 along the first direction X, the second distance corresponding to the gap 320 with a larger first distance is smaller, so that the liquid pressure at the inlet of the gap 320 is smaller, and the liquid pressure at the outlet of the gap 320 is larger. Correspondingly, the second distance corresponding to the gap 320 with a smaller first distance is larger, so that the liquid pressure at the inlet of the gap 320 is larger, the liquid pressure at the outlet of the gap 320 is smaller, and the cooling liquid 40 flows out slowly. In this way, it is conducive to prolonging the residence time of the cooling liquid in each gap 320, and it is convenient for the cooling liquid 40 to cool the battery cells, thereby helping to improve the temperature uniformity of the battery device.

Further, the gaps 320 are set to have the same size, and a size of the cross section of the gap 320 along the third direction Z remains unchanged, and the cross section is perpendicular to the third direction Z. In this case, when the liquid inlet (i.e., the notch 213) of the flow guide cavity 230 and the liquid outlet 122 are located on both sides of the plurality of gaps 320 along the first direction X, since the gaps 320 have the same size, the liquid flow rate and the flow speed of the liquid in each gap 320 can be consistent, which is conducive to improving the temperature uniformity of the battery device.

Specifically, along the first direction X and from a side where the liquid outlet 122 is located to a side where the notch 213 is located, when the pressure at the inlet of the gap 320 gradually increases, the inflow pressure of the cooling liquid increases, and the cooling liquid flows in more easily. When the pressure at the outlet gradually decreases, the cooling liquid 40 flows out more slowly. Thus, the retention time of the cooling liquid 40 in each gap 320 tends to be consistent.

Further, in some embodiments, along the first direction X and away from the liquid inlet 121, the bottom wall of the flow guide cavity 230 has an upward slope.

Referring to the embodiments of FIG. 2 and FIG. 4, taking the bottom plate 110 forming the bottom wall of the flow guide cavity 230 as an example, the bottom plate 110 extends along the first direction X. A region of an upper surface of the bottom plate 110 serving as the bottom wall of the flow guide cavity 230 is inclined at a certain angle with respect to the first direction X. In this way, when the immersion liquid cooling device 1 is in use, after the cooling liquid 40 flows into the flow guide cavity 230 from the notch 213 at the tail end of the flow channel portion 210, the flow resistance of the cooling liquid 40 in the flow guide cavity 230 is small, which is conducive to filling the flow guide cavity 230 as soon as possible.

Optionally, the slope may range from 0 degree to 0.5 degrees, which can accelerate the flow of the cooling liquid 40 without affecting the flow distribution of the cooling liquid 40 in the flow guide cavity 230.

In some embodiments, in the height direction of the housing 10, the flow guide cavity 230 has a structure with a large lower portion and a small upper portion. With this design, it is better to ensure that the cooling liquid 40 overflows only after filling the flow guide cavity 230.

Referring to FIG. 15, the flow guide cavity 230 has a structure with a large lower portion and a small upper portion, so that the volume of the lower portion of the flow guide cavity 230 is larger than that of the upper portion. In specific configuration, the shape of the cross section of the flow guide cavity 230 is not limited, as long as the volume of the lower portion of the flow guide cavity 230 is greater than that of the upper portion. For example, one of two opposite inner walls of the flow guide cavity 230 is the side surface p3 of the supporting portion 220, and the other is the side wall p2 of the flow channel portion 210. In this case, the side surface p3 of the supporting portion 220 may be inclined from the bottom to the top toward the flow channel portion 210, and the side wall p2 of the flow channel portion 210 may be inclined from the bottom to the top toward the supporting portion 220. Alternatively, only one of the side surface p3 of the supporting portion 220 and the side wall p2 of the flow channel portion 210 is inclined. Taking the supporting portion 220 as an example, the side surface p3 of the supporting portion 220 is inclined from bottom to top toward the flow channel portion 210, which means that the top of the side surface p3 of the supporting portion 220 is closer to the flow channel portion 210 than the bottom thereof.

Taking the case where both the side surface p3 of the supporting portion 220 and the side wall p2 of the flow channel portion 210 are inclined as an example, a narrowed opening effect is formed at the top of the flow guide cavity 230, and the side surface p3 of the supporting portion 220 and the side wall p2 of the flow channel portion 210 can prevent the cooling liquid 40 from overflowing upward when the flow guide cavity 230 is not filled. In this case, the flow guide cavity 230 of this embodiment can better ensure that the cooling liquid 40 overflows upward and flows into the respective gaps 320 after only the flow guide cavity 230 is filled. In this way, the cooling liquid 40 can flow into the respective gaps 320 at the same time, and is subject to a uniform resistance and has the same flow speed, so that the cooling effect of each battery cell 310 is consistent, and the battery temperature difference is small.

In some embodiments, referring to FIG. 1 and FIG. 7, the first supporting surface 211 and the second supporting surface 221 are located at the same height, and they are upper surfaces of the tops of the flow channel portion 210 and the supporting portion 220, respectively.

Specifically, the upper surface of the top of the flow channel portion 210 and the upper surface of the top of the supporting portion 220 are in the same height plane, and form the first supporting surface 211 and the second supporting surface 221, respectively. When the battery cell 310 is placed in the housing 10, two ends of the battery cell 310 only need to be respectively supported by the first supporting surface 211 and the second supporting surface 221, and then the battery cell 310 is sealed to the two supporting surfaces by a sealant. In this way, it is more convenient for placing the battery cell 310.

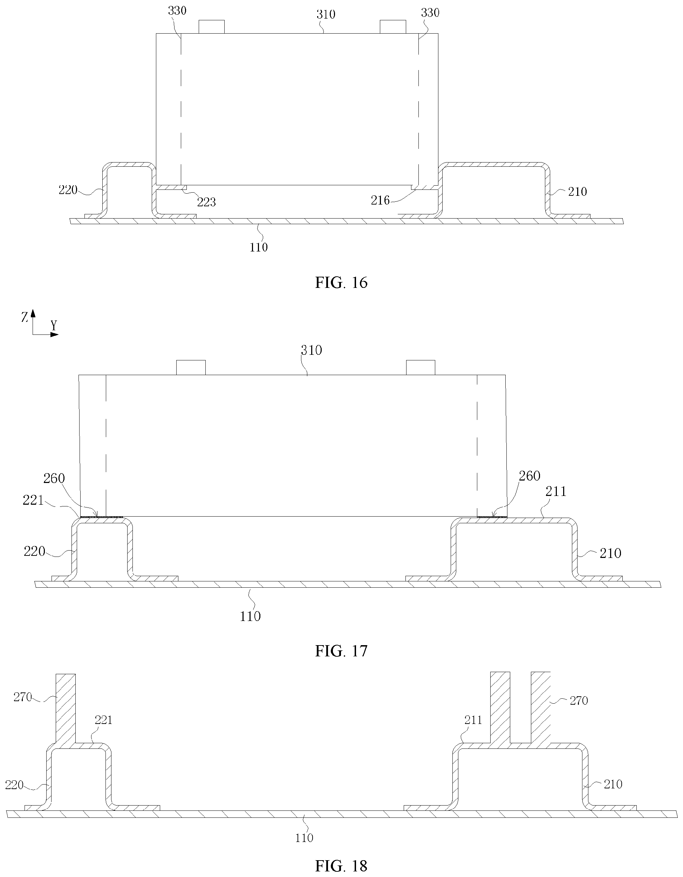

In some embodiments, referring to FIG. 16, the first supporting surface 211 and the second supporting surface 221 are located at the same height, and are respectively step surfaces formed on the side wall p2 of the flow channel portion 210 and the side surface p3 of the supporting portion 220 serving as the cavity wall of the flow guide cavity 230, so that the bottom of the battery cell group can partially enter the flow guide cavity 230 when the battery cell group is carried.

Specifically, a first step portion 216 is provided on the side wall p2 of the flow channel portion 210 facing the supporting portion 220, and a top surface of the first step portion 216 forms the first supporting surface 211. A second step portion 223 is provided on the side surface p3 of the supporting portion 220 facing the flow channel portion 210, and a top surface of the second step portion 223 forms the second supporting surface 221.

As shown in FIG. 16, with such a design, when the liquid cooling member 20 carries the battery cell 310, the bottom of the battery cell 310 can be inserted into the flow guide cavity 230. On the one hand, the cooling liquid 40 in the flow guide cavity 230 has a short path to enter the gap 320, and the heat dissipation efficiency is high. On the other hand, since the bottom of the battery cell 310 is accommodated in the flow guide cavity 230, a size of the battery pack in the height direction can also be reduced.

In some embodiments, referring to FIG. 17, a flexible sealing gasket 260 is provided on each of the first supporting surface 211 and the second supporting surface 221.

Take providing the flexible sealing gasket 260 on the first supporting surface 211 as an example. The flexible sealing gasket 260 is provided between the battery cell 310 and the flow channel portion 210 to improve the sealing performance therebetween. The manner and the effect of providing the flexible sealing gasket 260 on the second supporting surface 221 are same as those of providing the flexible sealing gasket 260 on the first supporting surface 211 and are not described herein again.

Optionally, the flexible sealing gasket 260 is, for example, a rubber gasket. The flexible sealing gasket 260 may be bonded and fixed on the first supporting surface 211.

In some embodiments, as shown in FIG. 18, along the first direction X, a plurality of blocking members 270 are provided on each of the first supporting surface 211 and the second supporting surface 221 at intervals. The blocking member 270 is configured to be inserted into the gap 320 between adjacent battery cells 310 in the battery cell group.

As shown in FIG. 17, taking the first supporting surface 211 as an example, a plurality of blocking members 270 are provided on the first supporting surface 211 along the first direction X. The blocking members 270 are configured to be inserted between adjacent battery cells 310 to support and position the battery cells 310.

Further, the blocking member 270 on the first supporting surface 211 and the blocking member 270 on the second supporting surface 221 are of the same height. With this configuration, when the height of the carried battery cell 310 is consistent with the height of the blocking member 270, and sizes of the blocking members 270 in the first direction X are the same, the blocking member 270 can also be directly used as a component for sealing both ends of the gap 320 in the first direction X. The blocking member 270 at this case may partially or completely replace the isolation member 330 in FIG. 12. Further, the blocking member 270 is an elastic member, which is inserted between two adjacent battery cells 310 and is in close contact with the battery cells 310.

In some embodiments, referring to FIG. 1 and FIG. 4, in the height direction of the housing 10, the liquid outlet 122 is located above the liquid cooling member 20.

Specifically, in this embodiment, the liquid outlet 122 is provided at the upper portion of the housing 10 and above the liquid cooling member 20 and the liquid inlet 121. With this configuration, the pipelines outside the housing 10 connected to the liquid outlet 122 and the liquid inlet 121 can be separated from each other to avoid mutual interference.

In addition, the liquid outlet 122 is provided at the upper portion of the housing 10, which can avoid a situation in which the cooling liquid 40 having a relatively low temperature is discharged prematurely when the liquid cooling member 20 leaks. Specifically, when the liquid cooling member 20 leaks the cooling liquid 40 due to a machining tolerance or a welding quality problem when welding the liquid cooling member 20 to the bottom plate 110, a temperature of the leaked cooling liquid 40 is relatively low, while a temperature of the cooling liquid 40 flowing out from the top of the gap 320 is relatively high. The cooling liquid 40 with the high temperature and the cooling liquid 40 with the low temperature both flow into the gap in the housing 10. The cooling liquid 40 with the high temperature has a tendency to flow upward faster, the cooling liquid 40 with the low temperature will not be prematurely discharged from the liquid outlet 122, and the cooling liquid 40 with the low temperature can have a long retention time in the housing 10. When the cooling liquid 40 is discharged from the liquid outlet 122, a part of the heat in the housing 10 can be carried away.

## Claims

1. An immersion liquid cooling device (1), comprising:
a housing (10) comprising a bottom plate (110) and a side plate (120), wherein the bottom plate (110) and the side plate (120) defines an accommodating cavity (130) configured to accommodate a battery cell group (30), and the side plate (120) is provided with a liquid inlet (121) and a liquid outlet (122);
a liquid cooling member (20) provided on the bottom plate (110), wherein the liquid cooling member (20) comprises a flow channel portion (210) extending along a first direction, a supporting portion (220) is provided at interval at at least one side of the flow channel portion (210) in a second direction, the second direction is perpendicular to the first direction, a flow guide cavity (230) having an open top is formed between the flow channel portion (210) and the supporting portion (220), the flow guide cavity (230) is in communication with the flow channel portion (210) in the second direction, and an end of the flow channel portion (210) in the first direction is in communication with the liquid inlet (121) to introduce cooling liquid (40) into the flow guide cavity (230);
wherein the flow channel portion (210) is provided with a first supporting surface (211) extending along the first direction, the supporting portion (220) is provided with a second supporting surface (221) extending along the first direction, and the first supporting surface (211) and the second supporting surface (221) are configured to cooperatively support the battery cell group (30).

2. The immersion liquid cooling device (1) according to claim 1, wherein in the first direction, the liquid cooling member (20) further comprises a front connecting member (240) and a rear connecting member (250) arranged in parallel, two ends of the flow channel portion (210) are respectively connected to the front connecting member (240) and the rear connecting member (250), two ends of the supporting portion (220) are respectively connected to the front connecting member (240) and the rear connecting member (250), and the front connecting member (240) and the rear connecting member (250) form a front cavity wall and a rear cavity wall of the flow guide cavity (230) in the first direction.

3. The immersion liquid cooling device (1) according to claim 2, wherein a bottom of the flow channel portion (210) is connected to the bottom plate (110) in a sealed manner, the bottom plate (110) is connected to the supporting portion (220) in a sealed manner, and the bottom plate (110) constitutes a bottom wall of the flow guide cavity (230).

4. The immersion liquid cooling device (1) according to claim 2, wherein a bottom of the flow channel portion (210) has an opening (214), and the bottom plate (110) constitutes a bottom wall of the flow channel portion (210).

5. The immersion liquid cooling device (1) according to claim 2, wherein bottoms of the flow channel portion (210), the supporting portion (220), the front connecting member (240), and the rear connecting member (250) are each provided with a bending portion (215), and the bending portion (215) is attached to the bottom plate (110) in parallel and connected to the bottom plate (110) in a sealed manner.

6. The immersion liquid cooling device (1) according to claim 5, wherein the liquid cooling member (20) is a metal stamping member.

7. The immersion liquid cooling device (1) according to claim 2, wherein the flow channel portion (210) of the liquid cooling member (20) and a bottom wall of the flow guide cavity (230) are both closed, and the liquid cooling member (20) is bonded, welded or fixed through a fastener to the bottom plate (110).

8. The immersion liquid cooling device (1) according to claim 2, wherein a plurality of flow channel portions (210) are provided in the second direction, the front connecting member (240) is provided with a plurality of liquid injection ports (241) respectively in communication with the plurality of flow channel portions (210), and the liquid inlet (121) is in communication with each of the liquid injection ports (241) through a pipeline.

9. The immersion liquid cooling device (1) according to claim 2, wherein a plurality of flow channel portions (210) are provided in the second direction, a branch flow channel (242) in communication with each of the flow channel portions (210) is provided in the front connecting member (240), and the front connecting member (240) is provided with a liquid injection port (241), and the liquid injection port (241) fluidly communicates the branch flow channel (242) with the liquid inlet (121).

10. The immersion liquid cooling device (1) according to claim 1, wherein in the first direction, the liquid outlet (122) and the liquid inlet (121) are located on the same side of the liquid cooling member (20), a buffer cavity (140) is provided between the liquid cooling member (20) and the side plate (120), another end of the flow channel portion (210) in the first direction is provided with a notch (213), and the notch (213) fluidly communicates an inner cavity of the flow channel portion (210) with the flow guide cavity (230).

11. The immersion liquid cooling device (1) according to claim 1, wherein in a height direction of the housing (10), the flow guide cavity (230) has a structure with a large lower portion and a small upper portion.

12. The immersion liquid cooling device (1) according to claim 1, wherein the first supporting surface (211) and the second supporting surface (221) are located at the same height, and are upper surfaces of tops of the flow channel portion (210) and the supporting portion (220), respectively; or
wherein the first supporting surface (211) and the second supporting surface (221) are located at the same height, and are respectively step surfaces formed on a side wall of the flow channel portion (210) and a side surface of the supporting portion (220) serving as a cavity wall of the flow guide cavity (230), so that a bottom of the battery cell group (30) partially enters the flow guide cavity (230) when the battery cell group (30) is carried.

13. The immersion liquid cooling device (1) according to claim 12, wherein a flexible sealing gasket (260) is provided on each of the first supporting surface (211) and the second supporting surface (221).

14. The immersion liquid cooling device (1) according to claim 12, wherein along the first direction, a plurality of blocking members (270) are provided on each of the first supporting surface (211) and the second supporting surface (221) at intervals, and each blocking member (270) is configured to be inserted into a gap between two adjacent battery cells in the battery cell group (30).

15. The immersion liquid cooling device (1) according to claim 1, wherein in a height direction of the housing (10), the liquid outlet (122) is located above the liquid cooling member (20).
